# EUROPÄISCHE PATENTSCHRIFT

(11) **EP 3 041 349 B1**
(45) Veröffentlichungstag und Bekanntmachung des Hinweises auf die Patenterteilung: **19.06.2019**
(21) Anmeldenummer: 14780772.1
(22) Anmeldetag: 02.09.2014
(51) Int. Cl.: A01K 51/00, A01K 47/06

(54) **VORRICHTUNG ZUR BEFALLSDIAGNOSE**
DEVICE FOR DIAGNOSING INFESTATION
DISPOSITIF DE DIAGNOSTIC DE CONTAMINATION

(30) Priorität: 04.09.2013 DE 202013007841 U
(43) Veröffentlichungstag der Anmeldung: 13.07.2016
(73) Patentinhaber: Bayer Animal Health GmbH, 51368 Leverkusen (DE)
(72) Erfinder: KRIEGER, Klemens, 51789 Lindlar (DE); HABIG, Jörg, 51145 Köln (DE); BÜCHLER, Ralph, 35274 Kirchhain (DE)
(74) Vertreter: BIP Patents
(86) Internationale Anmeldenummer: PCT/EP2014/068617
(87) Internationale Veröffentlichungsnummer: WO 2015/032753

(56) Entgegenhaltungen:
- DE-U1-202011 106 067
- GB-A- 2 495 284
- US-A- 4 867 731
- US-A1- 2008 280 528
- US-B1- 6 468 129

## Beschreibung

Die Erfindung betrifft eine Vorrichtung zur Untersuchung des Befalls von Honigbienenvölkern mit Varroamilben.

Seit den 2000er Jahren wird in Nordamerika und Europa ein massives Bienensterben beobachtet. Symptome sind das Fehlen der erwachsenen Bienen im Stock. Die Brut, junge Bienen, Honig und Pollen sind dagegen noch vorhanden. Als eine Ursache für das Bienensterben gilt der Befall mit der Varroamilbe (Varroa destructor). Die Varroamilben wurden wahscheinlich in der zweiten Hälfte des letzten Jahrhunderts in Europa, Vorderasien, den Amerikas, Japan und Afrika eingeschleppt und haben sich sehr schnell in den Völkern der europäischen Honigbiene (*Apis mellifera)* verbreitet. Im Gegensatz zu ihrem natürlichen Wirt, der asiatischen Honigbiene *(Apis cerana),* verfügt die europäische Honigbiene nicht über geeignete Abwehrmechanismen, was den Milben eine bessere Reproduktion und Verbreitung erlaubt. Ferner ist *Varroa destructor* Vektor für andere pathogene Mikroorganismen *(z.B. Viren, Bakterien).* Ohne eine wirksame Bekämpfung der Milben gehen die Bienenstöcke früher oder später ein. Ein zuverlässiges Behandlungsmanagement gegen die Varroamilben oder andere Varroamilben erfordert individuelle Befallsdiagnosen.

Eine bekannte Methode zur Diagnose des Befalls von Bienen mit Varroamilben ist die Verwendung einer herausnehmbaren Bodeneinlage, die unter den Waben in der Bienenbeute positioniert wird. Die Bodeneinlage ist meistens eine Klebefolie, an deren klebriger Oberseite herabfallende Varroamilbe festkleben und dort gezählt werden können. Es ist auch bekannt die Klebefolie durch ein darüber befindliches Gitter zu schützen, so dass die Varroamilben durch die Maschen des Gitters auf die Bodeneinlage fallen, die Bienen die Bodeneinlage aber nicht erreichen können. Auch hier kann die Zahl der Varroamilben, die auf der Klebefolie kleben, gezählt werden. Beide Methoden sind sehr unsicher, da unklar ist, welcher Anteil der Varroamilben des befallenen Bienenvolks überhaupt erfasst wurde. Auch fallen größere Mengen von anderem Unrat auf die Bodeneinlage, so dass die toten Milben nur schwer zu entdecken sind, wenn nicht eine regelmäßige Reinigung der Bodeneinlage erfolgt. Die bekannten Methoden sind deshalb eher für eine qualitative Befallsdiagnose geeignet als für eine quantitative. Dokument US-A-2008280528 offenbart eine Vorrichtung zur Untersuchung des Befalls von Honigbienenvölkern mit Varroamilben.

Eine weitere bekannte Methode zur Befallsdiagnose ist die sogenannte "Puderzuckermethode", bei der eine bestimmte Menge von Bienen in einem Behälter mit einem als Sieb ausgestalten Boden mit Puderzucker bestäubt werden. Durch Schütteln des Behälters mit den Bienen werden die Varroamilben von den Bienen getrennt und der Puderzucker verlässt mit den abgefallenen Varroamilben durch den Siebboden den Behälter. Puderzucker und Varroamilben können durch weiteres Sieben voneinander getrennt und die so separierten Varroamilben zahlenmäßig erfasst werden. Die "Puderzuckermethode" ist sehr aufwändig und benötigt vielerlei Gerätschaften.

Aufgabe der Erfindung ist es deshalb, eine Vorrichtung und ein Verfahren bereitzustellen, mit dem eine quantitative Diagnose des Befalls eines Honigbienenvolkes mit Varroamilben mit wenig Aufwand durchgeführt werden kann. Erfindungsgemäss wird die Aufgabe durch die kennzeichnenden Merkmale der Patentansprüche 1 und 14 gelöst.

Die erfindungsgemäße Aufgabe wird gelöst durch eine Vorrichtung zur Untersuchung des Befalls von Honigbienenvölkern mit Varroamilben, mit den kennzeichnenden Merkmalen des Anspruches 14.

Der Behälter ist aus einem Material dessen Festigkeit dem Nagen der Bienen standhält zum Beispiel aus Kunststoffmaterial (Folie oder Stegplatten) oder Metall.

Bevorzugt lässt sich der Behälter leicht zusammenstecken, öffnen und nach Befüllen mit einer Bienenprobe leicht verschließen.

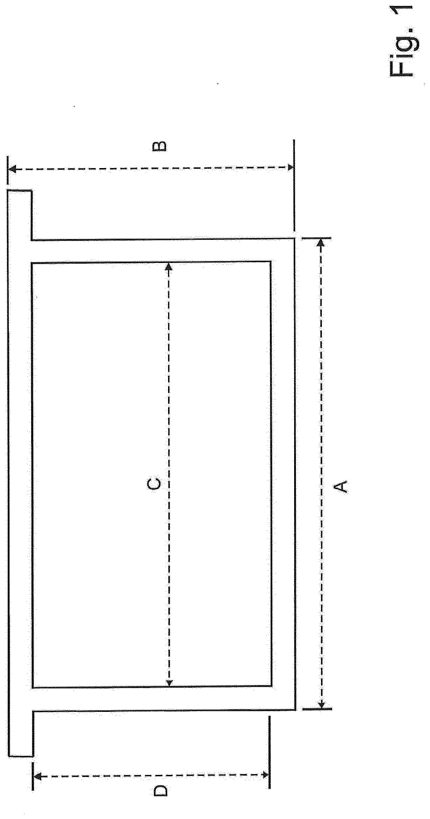

Die erfindungsgemäße Vorrichtung kann durch geeignete Haltemittel in einem Wabenrähmchen (Leerrähmchen) fixiert werden (**Fig. 1**) wie sie typischerweise in Beuten verwendet werden. Die **Tabelle 1** gibt einen Überblick über die Dimensionen von verschiedenen Typen von Wabenrähmchen.

**Tabelle 1**

| **Erläuterung:** A bzw. B sind die Außenmaße, C bzw. D die Innenmaße der Oberleiste ohne "Ohren" bzw. der Seitenleiste. | | | | |
|---|---|---|---|---|
| **Bezeichnung / Beute** | **A in mm** | **B in mm** | **C in mm** | **D in mm** |
| Albertiblätterstock | | | 420 | 270 |
| Allgäuer Beutensystem Schweizer Maß, ganz | 360 | 284 | | |
| Allgäuer Beutensystem Schweizer Maß, halb | 175 | 284 | | |
| Arbeitsblätterbeute der Reichsfachgruppe Imker | | | 223 | 370 |
| Badisch, ganz [Vereinsmaß] | 240 | 420 | 220 | 405 |
| Badisch, halb | 240 | 210 | 220 | 195 |
| Berlepsch | | | | |
| Berchdesgardener Maß | 235 | 370 | | |
| Braunsches Maß | | | | |
| Bremer Maß | 234 | 314 | 345 | 195 |
| Bürki-Kasten | | | 270 | 230 |
| Dadant US, Brutraum | 435 | 300 | 420 | 260 |
| Dadant US, Honigraum | 435 | 160 | 420 | 135 |
| Dadant Blatt, Brutraum | 435 | 285 | 410 | 265 |
| Dadant Blatt, Honigraum | 435 | 159 | 410 | 130 |
| Dadant(amerikanisch) | 460 | 270 | | |
| Dadant [modifiziert], Brutraum | 448 | 285 | 428 | 256 |
| Dadant [modifiziert], Honigraum | 448 | 145 | 428 | 122 |
| Dahte, Breitwaben | 347 | 225 | | |
| Dante, Hochwaben | 223 | 360 | | |
| Dänische Trogbeute | 310 | 260 | | |
| Deutsch Normal [Einheitsmaß] | 370 | 223 | 350 | 200 |
| Deutsch Normal, anderthalb | 370 | 338 | 350 | 315 |
| Deutsch Normal, flach | 370 | 159 | 350 | 135 |
| Deutsch Normal, halb | 370 | 110 | 350 | 100 |
| Elsaß-Lothringen-Maß | 240 | 320 | | |
| Französische Kongressbeute | 362 | 362 | | |
| Französisches Zentralvereinsmaß | 320 | 430 | | |
| Freudenstein | 338 | 200 | 315 | 180 |
| Gerstung, breit | 410 | 260 | 400 | 250 |
| Gerstung, hoch | 260 | 410 | 250 | 400 |
| Hetvetiakasten, Brutraum | 360 | 300 | 344 | 270 |
| Helvetiakasten, Honigraum | 360 | 150 | | |
| [Bayerisches]Hoffmann, klein | 370 | 260 | 350 | 235 |
| Hoffmann, groß | 410 | 260 | 400 | 250 |
| Holsteiner Maß | | | 260 | 300 |
| Italienisches Vereinsmaß | 426 | 261 | | |
| Jugoslawisches Sondermaß | 400 | 300 | | |
| Kuntzsch, breit | 330 | 250 | 310 | 230 |
| Kuntzsch, hoch | 250 | 335 | 230 | 310 |
| Langstroth, ganz | 448 | 232 | 428 | 203 |
| Langstroth, flach, 1/2 | 448 | 137 | 428 | 108 |
| Langstroth, flach, 2/3 | 448 | 159 | 428 | 130 |
| Langstroth, flach, 3/4 | 448 | 185 | 428 | 156 |
| Lüfteneggermaß | 420 | 220 | | |
| Meisterstock von Schulz | 350 | 240 | | |
| Österreichische Breitwabe | 426 | 255 | 420 | 220 |
| Rheinische ldealbeute (Schneider) | 250 | 420 | | |
| Spaarkast, Brutraum (Holländisch) | 360 | 218 | 340 | 198 |
| Spaarkast, Honigraum (Holländisch) | 360 | 140 | 340 | 120 |
| Spühlerkasten, Brutraum | 385 | 335 | 370 | 310 |
| Spühlerkasten, Honigraum | 385 | 170 | 370 | 150 |
| Schwäbische Lagerbeute (Elsaß) | 272 | 362 | | |
| Schweizermaß, alt | 272 | 277 | | |
| Schweizermaß, neu | 340 | 260 | | |
| Schweizerkasten | 286 | 354 | 270 | 354 |
| Schweizer Stock, Brutraum | 288 | 361 | | |
| Schweizer Stock, Honigraum | 288 | 177 | | |
| Schleswig Holsteinische Wanderbeute | 310 | 260 | | |
| Schweriner Maß | 472 | 171 | 420 | 145 |
| Sträuslis-Dadant-Albertirahmen | 435 | 300 | | |
| Traublinger Trogbeute | 390 | 240 | 370 | 220 |
| Tatran (tschechisch, slowakisch) | 420 | 275 | | |
| Boczonadibeute, ganz (ungarisch) | 420 | 360 | | |
| Boczonadibeute, halb (ungarisch) | 420 | 180 | | |
| Wiener Vereinsständer | 250 | 420 | | |
| Wielkopolski (polnisch) | 360 | 260 | | |
| Württembergisch, neu | 272 | 277 | 250 | 250 |
| Württembergisch, alt | 272 | 220 | 250 | 200 |
| 1,5 Zander | 420 | 330 | 400 | 300 |
| 4/3 Zander, Brutraum | 420 | 300 | 400 | 280 |
| 4/3 Zander, Honigraum | 420 | 150 | 400 | 130 |
| Zander | 420 | 220 | 400 | 191 |
| Zander, halb | 420 | 110 | 400 | 90 |
| ZaDant | 420 | 285 | 400 | 265 |
| Zander, flach | 420 | 159 | 400 | 130 |

Der Behälter der Vorrichtung sollte so dimensioniert sein, dass seine Höhe und Länge unter den Innenmaßen des verwendeten Wabenrähmchens bleiben. Die Breite des Behälters kann auch etwas größer sein als die Breite der Leisten des Wabenrähmchens. Bevorzugt sollte die Vorrichtung, die durch das Wabenrähmchen aufgespannte Fläche zu 10% bis 50% ausfüllen. Es können bei geeigneter Dimensionierung auch mehrere Vorrichtungen in einem Wabenrähmchen fixiert werden.

Der Behälter sollte eine Breite b im Bereich von 10 mm bis 50 mm, bevorzugt im Bereich von 20 mm bis 35 mm, eine Länge 1 im Bereich von 50 mm bis 428 mm, bevorzugt im Bereich von 100 mm bis 200 mm und eine Höhe h im Bereich von 20 mm bis 405 mm, bevorzugt im Bereich von 30 mm bis 100 mm haben.

Besonders bevorzugt soll der Behälter so dimensioniert sein, dass er geeignet ist eine Bienenprobe von ca. 50 g aufzunehmen.

Soweit natürliche Undichtigkeiten des Behälters nicht ausreichend erscheinen, um die Bienen für die Dauer ihres Aufenthalt in dem Diagnosebehälter mit Sauerstoff zu versorgen, kann der Behälter Belüftungsöffnungen haben, die so dimensioniert sind, dass die Bienen nicht durch sie entweichen können.

Bevorzugt weist der Behälter eine Öffnung in einer Größe, durch die Bienen entweichen können, auf. Besonders bevorzugt hat die Öffnung einen Durchmesser im Bereich von 7 mm bis 20 mm. Die Behälteröffnung hat einen Verschlussmechanismus, der es den Bienen im Inneren des Behälters erlaubt, diesen nach einer vorgegebenen Zeit selber zu öffnen und aus dem Behälter zu entweichen. Die vorgegebene Zeit beträgt möglichst mehr als 3 Stunden und idealerweise mehr als 6 Stunden.

Der Verschlussmechanismus kann in einem Futterteigklumpen bestehen, der die Behälteröffnung verschließt und eine Dicke senkrecht zur Behälterwand, in der sich die Öffnung befindet, im Bereich von 10 mm bis 30 mm hat oder in einem mit Futterteig gefüllten Röhrchen dessen Querschnitt dem der Behälteröffnung entspricht und das eine Länge im Bereich von 10 mm bis 30 mm hat. Als Futterteig kommt zum Beispiel pastöses Bienenfutter der Marke APIFONDA®, des Herstellers Südzucker AG in Frage, das hauptsächlich aus Saccharose besteht. Es enthält mikrofeine Kristalle, die im Durchmesser kleiner als 1/100 Millimeter sind. Jedes einzelne Kristall ist von einem dünnen Sirupfilm aus gelösten Zuckerarten überzogen, der das Zusammenwachsen und Verkrusten der Kristalle verhindert. Dadurch kann APIFONDA® mühelos von den Bienen abgetragen und direkt durch den Schlund aufgenommen werden. Alternativ kann der Verschlussmechanismus in einem beschichteten Papier (z.B. Klebeetikett), unbeschichteten Papier, Pappe dünnem Holz oder Ähnlichem bestehen, das die Behälteröffnung verschließt. Der Verschlussmechanismus ist so beschaffen, dass er von den Bienen selbständig aufgenagt werden kann und nach der vorgegebenen Zeit offen ist.

Das Mittel zum Fixieren der abgefallenen Varroamilben kann in einem Klebemittel am Boden des Behälters zum Beispiel einer Klebefolie bestehen, die eine klebende Seite aufweist, die dem Behälterinneren zugewandt ist. Das Mittel zum Fixieren der abgefallenen Varroamilben fixiert die von den Bienen abfallenden Varroamilben, stellt aber keine Beeinträchtigung der Bienen in ihrer Bewegungsfreiheit dar. Eine mögliche Klebefolie ist bekannt von den Varroa Mite Screen Boards der Firma Dadant & Sons Inc., 51 South 2nd Street, Hamilton, Illinois 62341 (z.B. B41501 Varroa Mite Screen Board C/1).

Bevorzugt befindet sich auf oder nahe dem Behälterboden ein Gitter (wie z.B. das der Fa. Dadant & Sons Inc.), das den Behälterboden vom Inneren des Behälters abtrennt und das durchlässig für die Varroamilben, aber nicht bienendurchlässig ist. Das Gitter hat typischerweise eine Maschenweite im Bereich von 0,5 mm bis 6 mm, bevorzugt im Bereich von 2 mm bis 4 mm. Die Bienen werden so am direkten Kontakt mit dem Klebemittel gehindert.

Das Mittel im Inneren des Behälters, das bewirkt, dass die Varroamilben von den Bienen abfallen, aber die Biene nicht schädigt, kann ein Wirkstoffträger mit einem akarizidhaltigen Wirkstoff sein, der eine selektiv akarizide Wirkung hat. Der Wirkstoffträger ist bevorzugt im Inneren des Behälters fixiert oder aufgehängt und gibt den akarizidhaltigen Wirkstoff durch Kontakt oder als Verdampfer ab. Der Wirkstoffträger wird möglichst so positioniert, dass der akarizidhaltige Wirkstoff sich gleichmäßig im Innenraum des Behälters ausbreitet oder von der Oberfläche des Wirkstoffträgers von den Bienen durch Kontakt abgenommen werden kann. Die abgefallenen Varroamilben können zu einem beliebigen Zeitpunkt erfasst werden und geben Auskunft über den Befallsgrad der Bienen. Hieraus kann nach dem in **Tabelle 2** angegebenen Schema eine Behandlungsbedürftigkeit des untersuchten Bienenvolkes abgeleitet werden:

**Tabelle 2**

| **Behandlungsbedürftigkeit eines Bienenvolkes bei Befall mit Varroamilben bei einer Bienenprobe von 50 Gramm** | | | |
|---|---|---|---|
| Monat | Nicht behandlungsbedürftig | behandlungsbedürftig | Akute Gefahr - dringend behandlungsbedürftig |
| Juli | 1 - 4 Milben | > 5 Milben | |
| August | 1 - 9 Milben | > 10 Milben | |
| September | 1 - 14 Milben | > 15 Milben | ≥ 25 Milben |

Geeignete Wirkstoffe mit selektiv akarizider Wirkung sind zum Beispiel Flumethrin, Amitraz, Coumaphos, Tau-Fluvalinate, Brompropylat, makrozyklische Lactone, organische Säuren wie Ameisensäure, Milchsäure, Oxalsäure sowie ätherische Öle wie Thymol, Nelkenöl, Zitronella-Öl und deren Bestandteile.

Das Mittel im Inneren des Behälters kann auch ein Heizmittel sein, das das Innere des Behälters auf Temperaturen oberhalb der normalen Bruttemperatur von Bienen von 36° C aufheizt. Bei Temperaturen von bis zu 45° C nehmen die Bienen noch keinen Schaden, aber die Varroamilben werden getötet bzw. lösen sich "freiwillig" von den Bienen und fallen herab.

Die erfindungsgemäße Vorrichtung kann zur Diagnose des Befalls eines Bienenvolks mit Varroamilben verwendet werden. Hierzu wird eine erfindungsgemäße Vorrichtung bereitgestellt und mit Bienen befüllt. Nach einer Zeit von mindestens 3 Stunden werden die von den Bienen abgefallenen und an dem Mittel zum Fixieren haftenden Varroamilben erfasst. Außerdem kann die erfindungsgemäße Vorrichtung dafür verwendet werden die Empfindlichkeit der einem Bienenvolk anhaftenden Varroamilben gegen verschiedene akarizidhaltige Wirkstoffe zu untersuchen, indem mehrere der erfindungsgemäßen Vorrichtungen mit unterschiedlichen Wirkstoffträgern bestückt werden. Hierzu werden mindestens zwei der erfindungsgemäßen Vorrichtungen bereitgestellt, die jeweils mit Wirkstoffträgern mit unterschiedlichen akarizidhaltigen Wirkstoffen bestückt sind. Beide Vorrichtungen werden mit Bienen aus demselben Bienenvolk befüllt. Nach einer Zeit von mindestens 3 Stunden werden die von den Bienen abgefallenen und an den Mitteln zum Fixieren haftenden Varroamilben erfasst. Die am Mittel zum Fixieren am Boden des Behälters erfassten Varroamilbenzahlen werden mit dem jeweils zugehörigen akarizidhaltigen Wirkstoff korreliert, so dass eine Aussage zur Wirkung des jeweiligen akarizidhaltigen Wirkstoffs gemacht werden kann. Als Gegenprobe können auch die an den Bienen noch anhaftenden Varroamilben mit den akarizidhaltigen Wirkstoffen korreliert werden. Die Bestimmung der Varroamilben, die den Bienen noch anhaften, kann durch die oben beschriebene Puderzuckermethode durchgeführt werden, die selber nicht Gegenstand der Erfindung ist.

### Figuren und Beispiele

**Fig. 1** zeigt die Skizze eines Wabenrähmchens.
**Fig. 2** zeigt ein Foto einer ersten Ausführungsform des Behälters der Vorrichtung zur Befallsdiagnose vor dem Zusammenstecken.
**Fig. 3** zeigt eine technische Zeichnung einer ersten Ausführungsform des Behälters der Vorrichtung zur Befallsdiagnose vor dem Zusammenstecken.
**Fig. 4** zeigt eine Vorrichtung zur Befallsdiagnose mit einer dritten Ausführungsform des Behälters in zusammengestecktem Zustand mit geöffnetem Deckel.
**Fig. 5** zeigt eine Vorrichtung zur Befallsdiagnose mit einer dritten Ausführungsform des Behälters, die zusammengesteckt und mit Bienen befüllt ist.
**Fig. 6** zeigt zwei Vorrichtungen zur Befallsdiagnose in einem Wabenrähmchen.
**Fig. 7** zeigt wie Bienen aus einer Vorrichtungen zur Befallsdiagnose entweichen.
**Fig. 8** zeigt eine technische Zeichnung einer zweiten Ausführungsform des Behälters der Vorrichtung zur Befallsdiagnose vor dem Zusammenstecken.
**Fig. 9** zeigt das Befüllen des Behälters der Vorrichtung zur Befallsdiagnose in der zweiten Ausführungsform.

**Fig. 1** zeigt die Skizze eines Wabenrähmchens in die eine oder mehrere der erfindungsgemäßen Vorrichtung zur Befallsdiagnose eingesetzt werden können. Die möglichen Maße der Abschnitte A, B, C und D ergeben sich aus **Tabelle 1.**

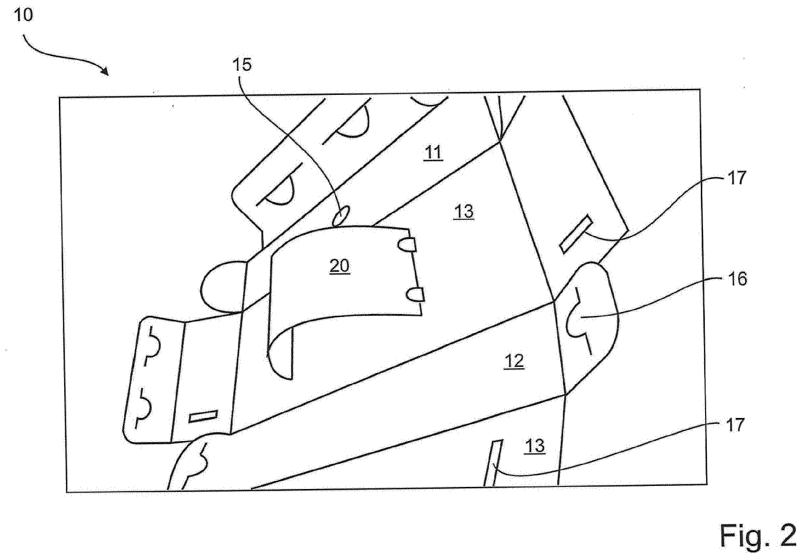

**Fig. 2** zeigt ein Foto einer ersten Ausführungsform des Behälters 10 der Vorrichtung zur Befallsdiagnose vor dem Zusammenstecken. Deckel 11, Boden 12 und die Seitenwände 13 des Behälters 10 sind aus einem Stücke faltbaren Kunststoffmaterial ausgestanzt. Beim Zusammenfalten werden jeweils die Laschen 16 in die entsprechenden Schlitze 17 gesteckt, so dass der Behälter in der zusammengefalteten Form bestehen bleibt. An einer Seitenwand 13 des Behälters 10 ist ein Wirkstoffstreifen 20 befestigt. Hierbei kann es sich zum Beispiel um einen Abschnitt eines Bayvarol®-Streifens handeln, also einen Polymermatrix Wirkstoffträger mit Flumethrin als Wirkstoff. Der Bayvarol®-Streifen ist so befestigt ist, das er beidseitig von den Bienen belaufen werden kann. Durch Kontakt wird der Wirkstoff Flumethrin von den Bienen von der Oberfläche des Streifens abgenommen und durch Körperkontakt auf alle Bienen und die Varroamilben in der Vorrichtung übertragen. Außer Bayvarol®-Streifen können zum Beispiel auch CheckMite®-Streifen mit Coumaphos oder Apivar®-Streifen mit Amitraz als Wirkstoff verwendet werden.
Der Behälter 10 hat eine Öffnung 15 in einer Größe, durch die Bienen entweichen können.

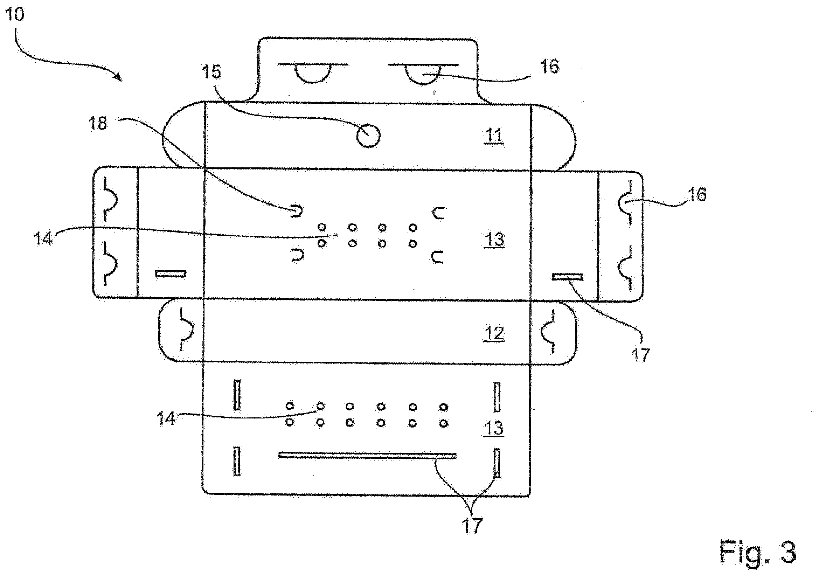

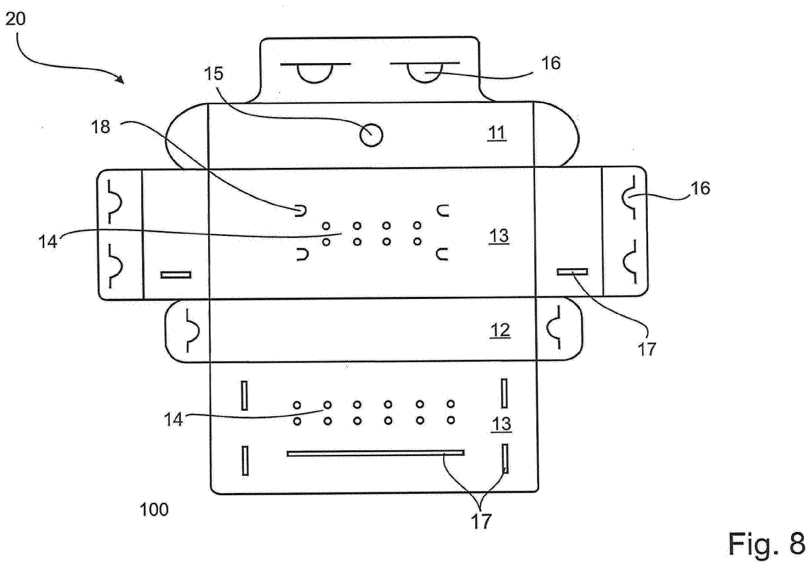

**Fig. 3** **und** **8** zeigen technische Zeichnungen einer ersten und zweite Ausführungsform 10 bzw. 20 des Behälters der Vorrichtung zur Befallsdiagnose vor dem Zusammenstecken. Gleiche Merkmale sind in beiden Figuren gleich bezeichnet. Hier sind deutlich zu erkennen:
11 - Deckel
12 - Boden
13 - Seitenwand
14 - Luftlöcher
15 - Öffnung, durch die die Bienen entweichen können
16 - Lasche
17 - Schlitz zur Aufnahme einer Laschen
18 - Haltelaschen für wirkstoffhaltigen Streifen
Die beiden gezeigten Ausführungsformen unterscheiden sich lediglich dadurch, dass in **Fig. 8** die Haltelaschen 18 gegenüber der **Fig. 3** verschoben sind.

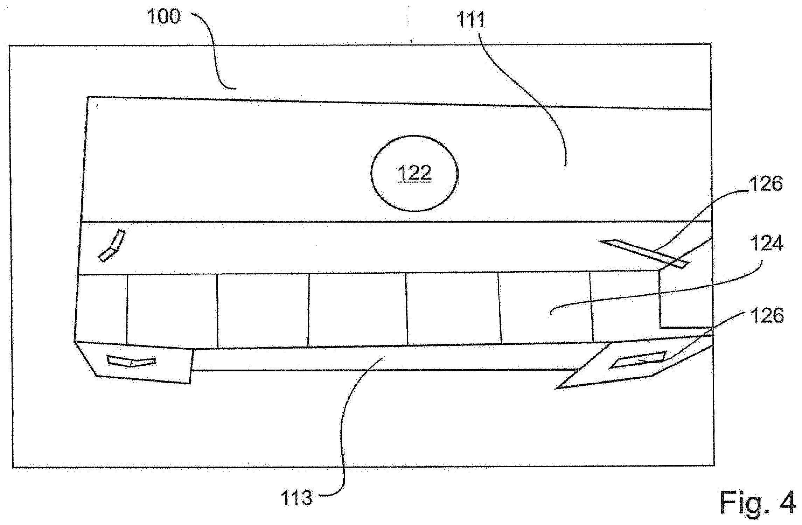

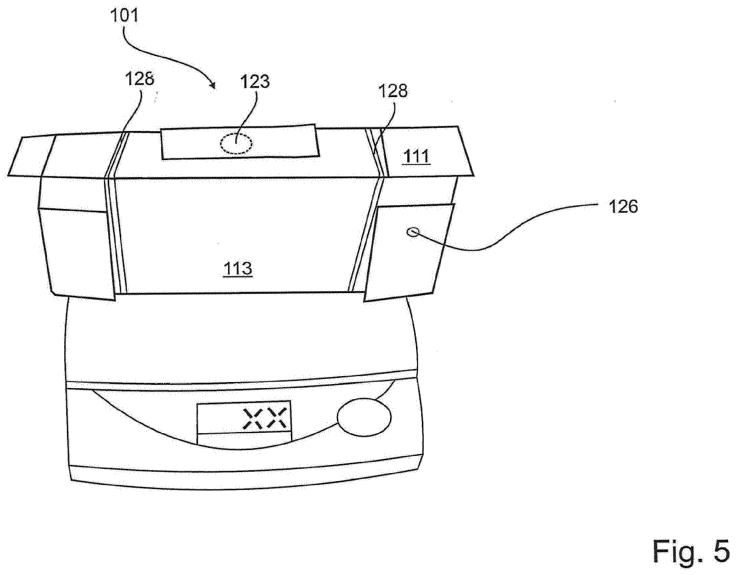

**Fig. 4** und **Fig. 5** zeigen eine Vorrichtung 100, 101 zur Befallsdiagnose mit einer dritten Ausführungsform des Behälters in zusammengestecktem Zustand. In **Fig. 4** ist die Ansicht von oben mit geöffnetem Deckel 111. In **Fig. 5** ist der Behälter zusammengesteckt und mit Bienen befüllt. In dieser zweiten Ausführungsform wurde für den Behälter eine faltbare Kunststoff-Stegplatte verwendet. Die Fixierung von Seitenwänden 113 und Boden erfolgt durch Löcher mit hindurchgesteckten Musterklammern 126. Die Fixierung des Deckels 111 erfolgt mit Gummibändern 128. Auf dem Boden des Behälters befindet sich eine Klebefolie 124 gemäß dem Varroa Mite Screen Boards der Firma Dadant & Sons Inc.. Die Öffnung im Deckel 111, durch die die Bienen entweichen können, ist in der in Fig. 4 gezeigten Variante der Vorrichtung 100 auf der Seite zum Behälterinneren durch eine Klumpen Futterteig 122 verschlossen. In der in Fig. 5 gezeigten Variante der Vorrichtung 101 ist die Öffnung im Deckel 111 auf der Außenseite mit einem Stück Papier verschlossen.

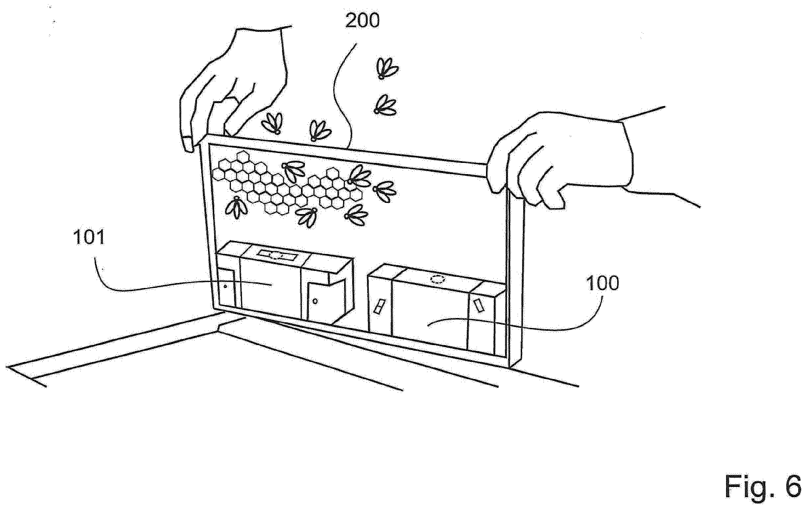

**Fig. 6** zeigt zwei Vorrichtungen zur Befallsdiagnose 100, 101, die in einem Wabenrähmchen 200 befestigt sind.

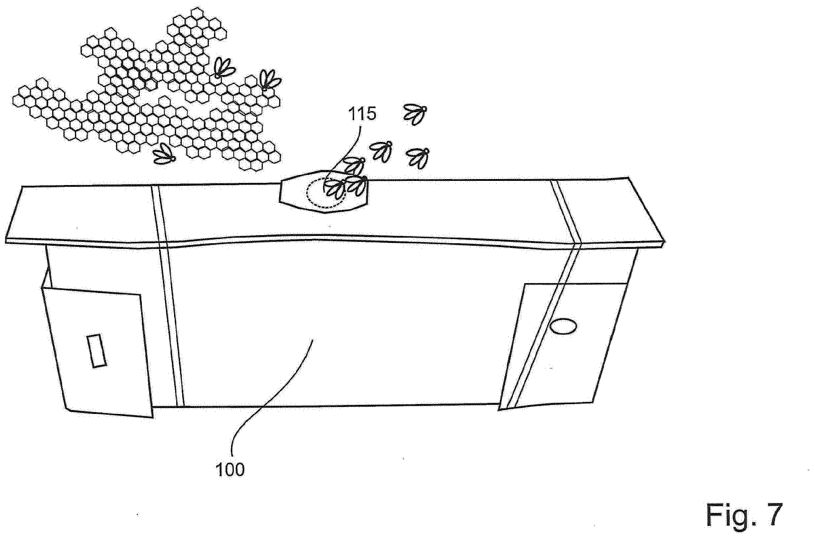

**Fig. 7** zeigt wie Bienen durch die Öffnung 115 im Deckel der Vorrichtungen 100 zur Befallsdiagnose entweichen.

Mit einer Vorrichtung 100 gemäß den **Fig. 4** bis **7** wurden über 100 Befallstests mit jeweils etwa 50 g Bienen durchgeführt. Die Maße des verwendeten Behälter betrugen, Breite b= 30 mm, Länge 1 = 150mm und Höhe h = 60 mm. An der Wand des Behälters befand sich ein 90 mm x ca. 30 mm Bayvarol®-Streifen. Nach 6 Stunden oder mehr konnten sich die Bienen aus dem Behälter befreien und befanden sich danach in einem weiteren größeren Behälter, indem eine Bestimmung der restlichen Varroamilben, die dann noch den Bienen anhafteten, stattfand. Diese Restmilbenbestimmung ergab, dass ≥95% der insgesamt festgestellten Varroamilben bereits in der erfindungsgemäßen Vorrichtung 100 von den Bienen abgefallen waren und dort gezählt werden konnten.

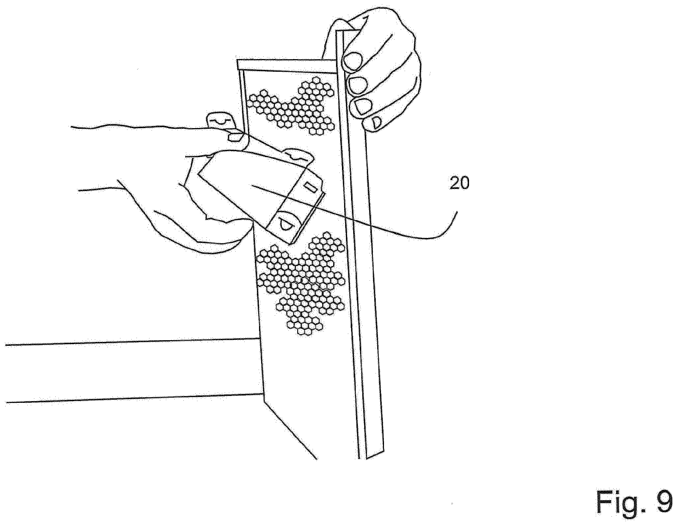

**Fig. 9** zeigt das Befüllen des Behälters der Vorrichtung zur Befallsdiagnose in der zweiten Ausführungsform. Der Behälter ist so gestaltet, dass eine Befüllung besonders einfach ist. Zur Befüllung streicht man die geöffnete Schachtel mit der nach oben zeigenden Öffnung von oben nach unten über die auf der Wabe sitzenden Bienen. Diese "kippen" dann über die Kante in den Behälter hinein.

## Patentansprüche

1. Vorrichtung zur Untersuchung des Befalls von Honigbienenvölkern mit Varroamilben enthaltend
- einen Behälter mit Boden, Seitenwänden und Deckel;
- Mittel zum Fixieren der abgefallenen Varroamilben am Boden des Behälters,
**dadurch gekennzeichnet dass**,
- sich im Inneren des Behälters ein Wirkstoffträger mit einem akarizidhaltigen Wirkstoff befindet, der bewirkt, dass die Varroamilben von den Bienen abfallen, aber die Bienen nicht geschädigt werden,
- dass der Behälter aus einem Material besteht, dessen Festigkeit dem Nagen der Bienen standhält, und
- der Behälter eine Öffnung hat in einer Größe, durch die Bienen entweichen können, und die Behälteröffnung mit einem Verschlussmechanismus versehen ist, der es Bienen im Inneren des Behälters erlaubt, diesen nach einer vorgegebenen Zeit selber zu öffnen und aus dem Behälter zu entweichen.

2. Vorrichtung nach Anspruch 1, **dadurch gekennzeichnet, dass** der Behälter aus Kunststoffmaterial, besonders bevorzugt Folie oder Stegplatten besteht.

3. Vorrichtung nach Anspruch 1 oder 2, **dadurch gekennzeichnet, dass** die Dimensionen Höhe des Behälters h und die Länge des Behälters 1 so bemessen sind, dass die Vorrichtung zwischen 10% und 50% der vom Wabenrähmchen aufgespannten Fläche ausfüllt.

4. Vorrichtung nach einem der Ansprüche 1 bis 3, **dadurch gekennzeichnet, dass** die Breite des Behälters b im Bereich von 10 mm bis 50 mm liegt, bevorzugt im Bereich von 20 mm bis 35 mm, die Länge des Behälters 1 im Bereich von 50 mm bis 428 mm liegt, bevorzugt im Bereich von 100 mm bis 200 mm und die Höhe des Behälters h im Bereich von 20 mm bis 405 mm liegt, bevorzugt im Bereich von 30 mm bis 100 mm.

5. Vorrichtung nach Anspruch 1, **dadurch gekennzeichnet, dass** sich die Behälteröffnung in den Seitenwänden oder im Deckel des Behälters befindet.

6. Vorrichtung nach Anspruch 1 oder 5, **dadurch gekennzeichnet, dass** der Verschlussmechanismus es den Bienen erlaubt diesen nach mehr als 3 Stunden, bevorzugt mehr als 6 Stunden zu öffnen.

7. Vorrichtung nach einem der Ansprüche 1, 5 oder 6, **dadurch gekennzeichnet,**
**dass** der Verschlussmechanismus in einem Futterteig für die Bienen besteht, der die Behälteröffnung verschließt und senkrecht zur Behälterwand, in der sich die Öffnung befindet, eine Dicke im Bereich von 10 mm bis 30 mm hat; oder
**dass** der Verschlussmechanismus in einem mit Futterteig gefüllten Röhrchen besteht, dessen Querschnitt im Bereich von 7 mm bis 20 mm dem der Behälteröffnung entspricht und das eine Länge im Bereich von 10 mmm bis 30 mm hat; oder
**dass** der Verschlussmechanismus in einem beschichteten Papier, unbeschichteten Papier, Pappe oder einem dünnen Holz besteht, das die Behälteröffnung verschließt.

8. Vorrichtung nach einem der Ansprüche 1 bis 7, **dadurch gekennzeichnet, dass** der Behälter Belüftungsöffnungen hat, die so dimensioniert sind, dass die Bienen nicht durch sie entweichen können

9. Vorrichtung nach einem der Ansprüche 1 bis 8, **dadurch gekennzeichnet, dass** das Mittel zum Fixieren der abgefallenen Varroamilben eine Klebefolie ist mit einer klebenden Seite, die dem Inneren des Behälters zugewandt ist.

10. Vorrichtung nach einem der Ansprüche 1 bis 9, **dadurch gekennzeichnet, dass** sich nahe dem Behälterboden ein Gitter befindet, dass den Behälterboden vom Inneren des Behälters abtrennt und das durchlässig für die Varroamilben, aber nicht bienendurchlässig ist und das Gitter bevorzugt eine Maschenweite im Bereich von 0,5 mm bis 6 mm, besonders bevorzugt im Bereich von 2 mm bis 4 mm hat.

11. Vorrichtung nach Anspruch 1, **dadurch gekennzeichnet, dass** der Wirkstoffträger den akarizidhaltigen Wirkstoff durch Kontakt oder durch Verdampfung abgibt und der akarizidhaltige Wirkstoff bevorzugt aus der Gruppe enthaltend Flumethrin, Amitraz, Coumaphos, Tau-Fluvalinate, Brompropylat, makrozyklische Lactone, organische Säuren wie Ameisensäure, Milchsäure, Oxalsäure sowie ätherische Öle wie Thymol, Nelkenöl, Zitronella-Öl und deren Bestandteile kommt.

12. Vorrichtung nach einem der vorhergehenden Ansprüche, **dadurch gekennzeichnet, dass** der Boden, die Seitenwände und der Deckel des Behälters aus einem Stück faltbarem Material gefertigt sind.

13. Vorrichtung nach Anspruch 12, **dadurch gekennzeichnet** und die Vorrichtung ihre endgültige Form durch Zusammenstecken mittels Laschen und Schlitzen erhält.

14. Verfahren zur Untersuchung des Befallsgrades von Honigbienenvölkern mit Varroamilben enthaltend die Schritte:
a. Bereitstellung der Vorrichtung nach einem der Ansprüche 1 bis 13,
b. Befüllen des Behälters mit Bienen;
c. Nach einer Zeit von mindestens 3 Stunden Erfassen der an dem Mittel zum Fixieren haftenden Varroamilben und/oder Erfassen der den Bienen noch anhaftenden Varroamilben.

15. Verfahren zur Untersuchung der Empfindlichkeit der Varroamilben eines Bienenvolkes gegen verschiedene akarizidhaltige Wirkstoffe:
a. Bereitstellung von mindestens zwei Vorrichtungen nach einem der Ansprüche 1 bis 13 mit Wirkstoffträgern, die jeweils unterschiedliche akarizidhaltige Wirkstoffe enthalten;
b. Befüllen der mindestens zwei Behälter mit Bienen eines Bienenvolkes;
c. Nach einer Zeit von mindestens 3 Stunden Erfassen der an dem Mittel zum Fixieren haftenden Varroamilben und optional Erfassen der den Bienen noch anhaftenden Varroamilben;
d. Korrelieren der am Mittel zum Fixieren erfassten Varroamilbenzahl mit dem jeweils zugehörigen akarizidhaltigen Wirkstoff.

## Claims

1. Device for examining the infestation of honeybee colonies with Varroa mites, containing
- a container with a bottom, side walls and a cover;
- means for fixing the dropped Varroa mites to the bottom of the container,
**characterized in that**
- within the container there is an active compound support having an acaricide-containing active compound which causes the Varroa mites to drop off the bees, but the bees are not harmed,
- **in that** the container consists of a material whose rigidity withstands the bees' chewing, and
- the container has an opening of a size through which bees can escape, and the opening of the container is provided with a sealing mechanism which permits bees within the container themselves to open the container after a predetermined period of time and to escape from the container.

2. Device according to Claim 1, **characterized in that** the container consists of plastic material, especially preferably film or web plates.

3. Device according to Claim 1 or 2, **characterized in that** the dimensions height of the container h and length of the container 1 are such that the device fills between 10% and 50% of the area extending from the honeycomb frame.

4. Device according to one of Claims 1 to 3, **characterized in that** the width of the container b is in the range of from 10 mm to 50 mm, preferably in the range of from 20 mm to 35 mm, the length of the container 1 is in the range of from 50 mm to 428 mm, preferably in the range of from 100 mm to 200 mm, and the height of the container h is in the range of from 20 mm to 405 mm, preferably in the range of from 30 mm to 100 mm.

5. Device according to Claim 1, **characterized in that** the opening of the container is located in the side walls or in the cover of the container.

6. Device according to Claim 1 or 5, **characterized in that** the sealing mechanism allows the bees to open it after more than 3 hours, preferably more than 6 hours.

7. Device according to one of Claims 1, 5 and 6, **characterized**
**in that** the sealing mechanism consists of a food dough for the bees which seals the opening of the container and which, perpendicularly to the container wall in which the opening is located, has a thickness in the range of from 10 mm to 30 mm; or
**in that** the sealing mechanism consists of a small tube filled with food dough whose cross section in the range of from 7 mm to 20 mm corresponds to that of the opening of the container and which has a length in the range of from 10 mm to 30 mm.
**in that** the sealing mechanism consists of coated paper, uncoated paper, cardboard or thin wood which seals the opening of the container.

8. Device according to one of Claims 1 to 7, **characterized in that** the container has ventilation openings whose dimensions are such that the bees cannot escape through them.

9. Device according to one of Claims 1 to 8, **characterized in that** the means for fixing the Varroa mites which have dropped off is an adhesive film whose adhesive side is facing the interior of the container.

10. Device according to one of Claims 1 to 9, **characterized in that** a grid which separates the bottom of the container from the interior of the container and through which the Varroa mites, but not the bees, may pass is located near the bottom of the container and the grid preferably has a mesh size in the range of from 0.5 mm to 6 mm, particularly preferably in the range of from 2 mm to 4 mm.

11. Device according to Claim 1, **characterized in that** the active compound support releases the acaricide-containing active compound by contact or by evaporation and the acaricide-containing active compound preferably comes from the group comprising flumethrin, amitraz, coumaphos, tau-fluvalinate, bromopropylate, macrocyclic lactones, organic acids such as formic acid, lactic acid, oxalic acid and essential oils such as thymol, clove oil, citronella oil and their constituents.

12. Device according to one of the preceding claims, **characterized in that** the bottom, the side walls and the cover of the container are made of a piece of foldable material.

13. Device according to Claim 12, **characterized in that** the device obtains its final form by assembling by means of tabs and slits.

14. Method of examining the degree of infestation of honeybee colonies with Varroa mites, containing the steps:
a. providing the device according to one of Claims 1 to 13,
b. filling the container with bees;
c. after a period of at least 3 hours, recording the Varroa mites adhering to the fixing means and/or recording of the Varroa mites still adhering to the bees.

15. Method of examining the sensitivity of the Varroa mites of a bee colony to various acaricide-containing active compounds, containing the steps:
a. providing at least two devices according to one of Claims 1 to 13 which are equipped with active compound supports, each of which contains different acaricide-containing active compounds;
b. filling the at least two containers with bees of a honeybee colony;
c. after a period of at least 3 hours, recording the Varroa mites adhering to the fixing means and optionally recording of the Varroa mites still adhering to the bees;
d. correlating the number of Varroa mites recorded on the fixing means with the respective acaricide-containing active compound.

## Revendications

1. Dispositif pour l'étude de l'infestation de populations d'abeilles à miel par des varroas, contenant :
- un contenant muni d'un fond, de parois latérales et d'un couvercle ;
- un moyen de fixation des varroas tombés au fond du contenant,
**caractérisé en ce que**
- un support d'agent actif comprenant un agent actif contenant un acaricide se trouve à l'intérieur du contenant, qui agit de manière à faire tomber les varroas des abeilles sans nuire aux abeilles,
- le contenant est constitué par un matériau dont la solidité résiste au rongement des abeilles, et
- le contenant comprend une ouverture d'une taille permettant aux abeilles de s'échapper, et l'ouverture du contenant est munie d'un mécanisme de fermeture, qui permet aux abeilles à l'intérieur du contenant d'ouvrir celui-ci elles-mêmes après une durée prédéterminée et de s'échapper du contenant.

2. Dispositif selon la revendication 1, **caractérisé en ce que** le contenant est constitué par une matière plastique, de manière particulièrement préférée un film ou des plaques alvéolaires.

3. Dispositif selon la revendication 1 ou 2, **caractérisé en ce que** les dimensions de hauteur du contenant h et de longueur du contenant 1 sont déterminées de telle sorte que le dispositif remplisse entre 10 % et 50 % de la surface couverte par le cadre en nid d'abeilles.

4. Dispositif selon l'une quelconque des revendications 1 à 3, **caractérisé en ce que** la largeur du contenant b se situe dans la plage allant de 10 mm à 50 mm, de préférence dans la plage allant de 20 mm à 35 mm, la longueur du contenant l se situe dans la plage allant de 50 mm à 428 mm, de préférence dans la plage allant de 100 mm à 200 mm, et la hauteur du contenant h se situe dans la plage allant de 20 mm à 405 mm, de préférence dans la plage allant de 30 mm à 100 mm.

5. Dispositif selon la revendication 1, **caractérisé en ce que** l'ouverture du contenant se trouve dans les parois latérales ou dans le couvercle du contenant.

6. Dispositif selon la revendication 1 ou 5, **caractérisé en ce que** le mécanisme de fermeture permet aux abeilles d'ouvrir celui-ci après plus de 3 heures, de préférence plus de 6 heures.

7. Dispositif selon l'une quelconque des revendications 1, 5 ou 6, **caractérisé en ce que** le mécanisme de fermeture consiste en une pâte de nourrissement pour les abeilles, qui ferme l'ouverture du contenant et présente, perpendiculairement à la paroi du contenant dans laquelle l'ouverture se trouve, une épaisseur dans la plage allant de 10 mm à 30 mm ; ou
**en ce que** le mécanisme de fermeture consiste en un tube rempli avec une pâte de nourrissement, dont la section transversale est dans la plage allant de 7 mm à 20 mm de celle de l'ouverture du contenant et qui a une longueur dans la plage allant de 10 mm à 30 mm ; ou
**en ce que** le mécanisme de fermeture consiste en un papier revêtu, un papier non revêtu, un carton ou un bois mince, qui ferme l'ouverture du contenant.

8. Dispositif selon l'une quelconque des revendications 1 à 7, **caractérisé en ce que** le contenant comprend des ouvertures d'aération, qui sont dimensionnées de telle sorte que les abeilles ne puissent pas s'échapper par celles-ci.

9. Dispositif selon l'une quelconque des revendications 1 à 8, **caractérisé en ce que** le moyen de fixation des varroas tombés est un film adhésif comprenant un côté adhésif qui est orienté vers l'intérieur du contenant.

10. Dispositif selon l'une quelconque des revendications 1 à 9, **caractérisé en ce qu'**une grille se trouve à proximité du fond du contenant, qui sépare le fond du contenant de l'intérieur du contenant, et qui peut être traversée par les varroas, mais pas par les abeilles, la grille ayant de préférence une largeur de mailles dans la plage allant de 0,5 mm à 6 mm, de manière particulièrement préférée dans la plage allant de 2 mm à 4 mm.

11. Dispositif selon la revendication 1, **caractérisé en ce que** le support d'agent actif libère l'agent actif contenant un acaricide par contact ou par évaporation, et l'agent actif contenant un acaricide est de préférence du groupe contenant la fluméthrine, l'amitraz, le coumaphos, le tau-fluvalinate, le bromopropylate, les lactones macrocycliques, les acides organiques tels que l'acide formique, l'acide lactique, l'acide oxalique, ainsi que les huiles éthérées telles que le thymol, l'huile de clou de girofle, l'huile de citronnelle et leurs constituants.

12. Dispositif selon l'une quelconque des revendications précédentes, **caractérisé en ce que** le fond, les parois latérales et le couvercle du contenant sont fabriqués en une pièce de matériau pliable.

13. Dispositif selon la revendication 12, **caractérisé en ce que** le dispositif obtient sa forme finale par assemblage au moyen de brides et de fentes.

14. Procédé d'étude du degré d'infestation de populations d'abeilles à miel par des varroas, contenant les étapes suivantes :
a. la préparation du dispositif selon l'une quelconque des revendications 1 à 13,
b. le remplissage du contenant avec des abeilles ;
c. après une durée d'au moins 3 heures, la détermination des varroas adhérant au moyen de fixation et/ou la détermination des varroas adhérant encore aux abeilles.

15. Procédé d'étude de la sensibilité des varroas d'une population d'abeilles à différents agents actifs contenant un acaricide, contenant les étapes suivantes :
a. la préparation d'au moins deux dispositifs selon l'une quelconque des revendications 1 à 13 avec des supports d'agents actifs qui contiennent chacun des agents actifs contenant un acaricide différents ;
b. le remplissage desdits au moins deux contenants avec des abeilles d'une population d'abeilles ;
c. après une durée d'au moins 3 heures, la détermination des varroas adhérant au moyen de fixation et éventuellement la détermination des varroas adhérant encore aux abeilles ;
d. la corrélation du nombre de varroas déterminé sur le moyen de fixation avec l'agent actif contenant un acaricide correspondant.
